# EUROPEAN PATENT SPECIFICATION

(11) **EP 2 337 954 B1**
(45) Date of publication and mention of the grant of the patent: **31.12.2014**
(21) Application number: 09822275.5
(22) Date of filing: 19.10.2009
(51) Int. Cl.: F03D 11/04, F03D 7/02

(54) **A FLOATABLE WIND POWER PLANT**
SCHWIMMFÄHIGE WINDKRAFTANLAGE
EOLIENNE FLOTTABLE

(30) Priority: 24.10.2008 SE 0802274
(43) Date of publication of application: 29.06.2011
(73) Proprietor: FLOWOCEAN Limited, Road Town, Tortola (VG)
(72) Inventor: MORITZ, Bertil, S-723 48 Västerås (SE)
(74) Representative: Karlsson, Leif Gunnar Börje
(86) International application number: PCT/SE2009/051185
(87) International publication number: WO 2010/047651

(56) References cited:
- EP-A1- 1 666 723
- EP-A1- 1 666 723
- WO-A1-99/02856
- WO-A1-99/02856
- WO-A1-02/073032
- WO-A1-2007/009464
- WO-A1-2007/009464
- DE-A1- 3 107 252
- NL-C2- 1 008 318
- US-A- 5 278 773
- US-A1- 2008 111 379

## Description

### TECHNICAL FIELD OF THE INVENTION

This invention refers generally to a floatable wind power plant and more specifically to a wind power plant, which is structured as a floating installation.

For applying the invention it refers to and is intended to be applied at an installation for creating prerequisites for generating electric power and electric energy from a prevailing force of a wind and the direction of said wind.

Installations of this kind can then comprise, a; individual pontoon units, which may float in a body of water and which however are coordinated with each other, b; a plurality of, at least two, wind turbines (wind-driven propellers), oriented adjacent to each other and coordinated with each other, c; a mooring system, solidly anchored to a limited bottom area of the mentioned body of water, d; a generator unit, which may be driven by the rotating motion of the wind turbines for generating said electric power, **e;** a cable section, connected on the one hand to said generator unit and on the other hand to a land-based distribution network, adapted for distributing generated electric power.

This invention has been suggested with the intention of providing an installation and an application, in which at least two of said pontoon units can be coordinated with one bracing beam or the like, such as a beam horizontally oriented, adapted to form and/or support a first frame structure, oriented vertically or essentially vertically, to which frame structure and/or bracing beam said wind turbines are related and distributed, preferably side-relatedly, and wherein at least a third one of said pontoon units is to be capable of being coordinated with a second horizontally or essentially horizontally oriented frame structure, wherein said first frame structure and said second frame structure are united i.a. by means of associated frame portions.

The invention envisages utilizing a control unit or control equipment, which to advantage can find its use in an installation as mentioned above and which is to control associated means and/or arrangements, by using input data and calculate output data or signals.

### BACKGROUND OF THE INVENTION

Methods, arrangements, and structures related to the technical field mentioned above and having a function and a character, which fulfil requirements set up is known earlier in a plurality of different embodiments.

With regard to installations of this type it is known earlier to structure necessary pontoons or pontoon units in such manner that the latter rest horizontally against and floating on the water surface of a body of water or to structure them as floating vertical posts, such as with associated ballast or ballast-related arrangements.

As examples or the first-mentioned category the contents of the following Patent Publications may be mentioned, viz. NL-1 008 318; EP-1 106 825-A2; US-6 294 844-B1; DE-32 24 976-A1; DE-197 27 330-A1; WO-00/586221-A1; DE-198 46 796-A1, and WO-02/073032-A1. respectively.

As examples of the last-mentioned category having vertical posts, serving as pontoon units, the contents of Patent Publications WO-2005/040 604-A2 and WO-03/076 800-A2 may be mentioned.

If the basic prerequisites associated with the present invention are considered, also to the earlier standpoint of technology may be noted, the subject matter of Patent Publication WO-2007/009 464-A1 and particularly Figures 1 and 2 illustrated therein.

Here a floatable wind power plant, in the form of an individual installation related to a body of water, will be shown and described and more particularly a system for creating prerequisites for generating electric power from a prevailing force of the wind and its allocated and instant direction.

The system of the type indicated here comprises **a;** individual but mechanically coordinated pontoon units, which may float in a body of water, **b;** a plurality of, at least two, wind turbines (wind-driven propellers), oriented adjacent to each other and coordinated witg each other, **c;** a mooring system, solidly anchored to a restricted bottom area of said body of water, **d;** a generator unit, which may be driven by the rotational movements of one or more wind turbines for generating said electric energy, and **e;** a cable section, connected on the one hand to said generator unit and on the other hand to a distribution network based on land and distributing generated electric power.

More specifically said pontoon units are to be structured by and associated with at least two vertical or at least essentially vertical posts, which may float in themselves for forming i.a. a first vertical frame structure.

Under all circumstances the existence will be required at least of one upright or equivalent stabilizing the vertical position of the first frame structure in the body of water, said upright or similar being designated as a "third pontoon unit" in the following.

Said two (three) post-shaped pontoon units are flexurally rigid in themselves and are furthermore adapted to be able to vertically support at least one horizontally oriented carrier beam structure, which is flexurally rigid in itself.

Such carrier beam structure is to be adapted and dimensioned such, that it will be able to support a plurality of said wind turbines horizontally.

Each one of said post-shaped pontoon units and said upright or third pontoon unit are dimensioned such, with regard to each other and/or adapted such, that with their lower portions immersed in said body of water they keep the upper portions of the two mentioned frame structures floating over the surface of the water.

Said third upright is to be displaced laterally by one plane, oriented through said first frame structure and said two posts, with the third upright being adapted on the one hand to be able to cooperate with said first frame structure over a second frame structure and on the other hand to cooperate maintainingly with said mooring system.

It is specifically indicated here that said pontoon units are to be coordinated with a horizontally oriented carrier beam or carrier beam structure adapted to be included in, to form and/or to support a first, vertically or essentially vertically oriented, frame structure, to which frame structure and/or carrier beam said wind turbines are side-relatedly distributed, and wherein at least the third one of said pontoon units is to be coordinated with a second horizontally or essentially horizontally oriented frame structure, said first frame structure and said second frame structure being securely attached to each other i.a. by associated frame related portions.

It is known that a floating installation of this type and having a securely anchored mooring system will have a tendency, i.a. of the forming of the waves, to turn the plant or installation as a unit, including the wind turbines, so that the latter will deviate somewhat from a prevailing and instant direction of the wind and the eye of the wind, whereby a desired maximum output of power will be reduced.

Considering the significant features related to the present invention the content of the following Patent Publications are to be mentioned as relevant prior art constructions.

Patent Publication WO99/02856 discloses an installation comprising windmills (1), which are mounted on a frame (5,6,7), said frame is provided with float bodies (15) and it is capable of a rotation about a vertical axis by using appropriate driving means, in order to turn the windmills and the installation towards the wind.

Page 3, lines 10 to 25, indicates that a usable driving means is in the form of a propeller and on Page 7, lines 14 to16, it is suggested that at a prevailing low wind speed the plant or installation may be driven in an "opposite" direction by unsing said propeller.

Patent Publication FR-2 890 706-A1 is disclosing a wind driven plant, where the wind propellers are arranged for rotating a common generator unit.

Patent Publication US-2003/0 129 059-A1 is disclosing a mechanism (16), in order to individually adopt the pitch value for a number of propeller blades (15A, 15B and 15C).

Patent Publication WO-99/02866-A1 is also considered to disclosing a relevant prior art and is considered to be the most relevant prior art and the preamble of Claim 1 is disclosing the common features between the present invention and this prior art.

### STATEMENT OF THE PRESENT INVENTION

### TECHNICAL PROBLEM

If the circumstance is considered, that the technical evaluations, which a person skilled in the art will have to carry out in order to offer a solution of one or more technical problems are on the one hand initially a necessary knowledge of the measures and/or the sequence of measures which are to be carried out and on the other hand a necessary choice of the one or more means which are necessary, the following technical problems should in consideration of this be relevant in producing the present subject of invention.

Considering the earlier standpoint of technology as it has been described above it must therefore be seen as a technical problem to be able to understand the significance of, the advantages related to and/or the technical measures and considerations that will be required, in a floating wind power plant, such as a system related to a pool of water, and more specifically a system for creating prerequisites from a prevailing wind force for generating electric energy, to offer a light structure, which can be based on utilizing two or more vertical posts, each serving as a pontoon unit, one or more vertical uprights or similar, also serving as a pontoon unit, one or more bar-shaped means dimensioned for specifically taking up compressive forces, and a plurality of means dimensioned for pronounced taking up of tractive forces and also to offer utilization of a control unit or control equipment for controlling or turning the wind turbines against the direction of the wind and up towards the eye of the wind, in response to a prevailing direction of the wind, adapted to be able to process relevant incoming data in calculation circuits for via means, apparatus and/or arrangements enforceably being able to rotate the floatable structure or installation as a unit.

There is a technical problem in being able to understand the significance of, the advantages related to and/or the technical measures and considerations that will be required for introducing as incoming data, input data, to said control equipment i.a. the relevant direction of the wind and the relevant direction of the propeller of the wind turbine and similar.

There is a technical problem in being able to understand the significance of, the advantages related to and/or the technical measures and considerations that will be required for letting control equipment be adapted to generate, with associated algorithms and with the assistance of the calculation circuits, outgoing data, output data, which over associated adaptation circuits cause actuation of one or more means, apparatus and/or arrangements for creating rotation of the floating installation towards and in coming up against the eye of the wind.

There is a technical problem in being able to understand the significance of, the advantages related to and/or the technical measures and considerations that will be required for letting said means, apparatus and/or arrangements be comprised of one or more sub-marine propeller units.

There is a technical problem in being able to understand the significance of, the advantages related to and/or the technical measures and considerations that will be required for letting one or more of said means, apparatus and/or arrangements be comprised of at least one installation displacing a chosen fastening point to the mooring system.

There is a technical problem in being able to understand the significance of, the advantages related to and/or the technical measures and considerations that will be required for letting such a displacement point be associated with an upper portion of a utilized mooring system extending over the surface of the water.

There is a technical problem in being able to understand the significance of, the advantages related to and/or the technical measures and considerations that will be required for letting a calculation means or circuit, with its associated algorithms, and associated with the control equipment be permitted to actuate an arrangement for controlling the turning of and/or the motion of the propeller blade during its rotation and that a first means can be adapted, at least during one rotation, to provide over the arrangement, one or more propeller blades with different turning positions and/or pitch setting.

There is a technical problem in being able to understand the significance of, the advantages related to and/or the technical measures and considerations that will be required for letting said arrangement be adapted to turn one or more propeller blades to a first turning position, during a part of or the whole of its downwards directed motion and adapted to turn one or more propeller blades to a second turning position, during a part of or the whole of its upwards directed motion.

There is a technical problem in being able to understand the significance of, the advantages related to and/or the technical measures and considerations that will be required for letting said arrangement be controllable by said control unit or control equipment so as, in response to input signals as input data i.a. in the form of relevant force of the wind, the instant angular position of the propeller blades relative to their hubs, the pitch profile of the propeller blades and/or relevant wind disturbances, to generate an output signal as output data for changing the position of rotation of the propeller blades towards maximized generated electric power.

There is a technical problem in being able to understand the significance of, the advantages related to and/or the technical measures and considerations that will be required for letting the arrangement of the control unit or the control equipment be actuated by the distribution of the speed of the wind within the region of rotation of the propeller blade.

### THE SOLUTION

The present invention takes as its starting point the known technology of a floating wind power plant mentioned by way of introduction, such as in the form of an installation related to a body of water for creating prerequisites from a prevailing wind force and wind direction for generating electric power, comprising, **a;** individual but coordinated pontoon units, which may float in a body of water, **b;** a plurality of, at least two, turbines (wind-driven propellers), oriented adjacent to each other and coordinated with each other, c; a mooring system, solidly anchored to a restricted bottom area of said body of water, d; a generator unit, which may be driven by the rotational motion of a turbine for generating said electric power, and e; a cable section, connected on the one hand to said generator unit and on the other hand to a land-based distribution network distributing generated electric power.

In accordance with the specific peculiarities or features of the invention, utilizing a control unit or control equipment is indicated, for, in response to a prevailing direction of the wind, with the assistance of one or more means and/or apparatuses and/or arrangements, turning the wind turbines towards and up to the direction of the wind and the eye of the wind, by controllably turning the floating plant or installation as a unit.

Within the frame of the present invention it is further indicated to introduce to said control equipment as input data, values indicating the relevant and instant direction of the wind, relevant direction of the propeller blades of the wind turbine and similar.

Furthermore, it is indicated that the control equipment is to generate outgoing data over associated calculating circuits for affecting and/or activating one or more means, apparatus and/or arrangements for creating a rotation of the floating plant or installation in the water and around its attachment point of the mooring system.

One or more of said means or apparatuses can then be comprised of a sub-marine propeller unit.

One or more of the mentioned means or apparatuses can then be comprised of horizontally displacing equipment, for a selected attachment point of the mooring system.

Such displacement or attachment point can be allotted to an upper floatable portion of the mooring system.

A calculation circuit, associated with the control unit and having associated algorithms, is to be able to activate and actuate an arrangement for controlling the turning motion of the propeller blade during its rotation, and a first means is to be adapted to provide the propeller blade with different positions of rotation via said arrangement, at least during one revolution.

Said arrangement is at that time adapted to turn the propeller blade to a first position of rotation during a part of or the whole of the downward motion thereof and is adapted to turn the propeller blade to a second position of rotation during a part of or the entire upwards motion thereof.

Said arrangement is controllable by the control unit or the control equipment for, in response to instantaneous input signals i.a. in the form of relevant force of the wind, the angular position of the propeller blade relative to its hub, the pitch of the propeller blades and/or relevant disturbances, generating an output signal for changing the angular positions of the propeller blades towards maximized generated electric power.

The arrangement of the control unit and/or the control equipment can also be affected by the distribution of the speed of the wind in the field of rotation of the propeller blade.

### ADVANTAGES

The advantages, which primarily must be considered to be characterizing of the present invention and the specific significant characteristics indicated thereby, are that in this manner prerequisites have been created for making it possible to generate electric power by a floatable wind power plant or installation in the form of a structure, and to create prerequisites for generating electric power from a prevailing force of the wind and direction of the wind.

Structures of relevant type may then comprise i.a. **a;** individual but coordinated pontoon units, which are buoyant in a body of water, **b;** a plurality of, at least two, turbines (wind-driven propellers), oriented adjacent to each other and coordinated with each other, **c;** a mooring system, solidly anchored to a restricted bottom area of said body of water, **d;** a generator unit, which may be driven by the rotational motion of a turbine, for generating said electric power, and e: a cable section, connected on the one hand to said generator unit and on the other hand to a land-based distribution network, distributing generated electric power.

More specifically the utilization of a control unit and/or control equipment for controlling the wind turbines towards a prevailing direction of the wind and eye of the wind in response to a prevailing direction of the wind with the assistance of one or more means, apparatus and/or arrangements by rotating the buoyant installation as a unit up towards the eye of the wind is further disclosed where said control unit is responsive to input data to calculate relevant output data for manoevering sand plant or installation in its water pool.

The subject matter that primarily must be considered to be characterizing of the present invention is set forth in the characterizing portion of the following claim 1.

### BRIEF DESCRIPTION OF THE DRAWINGS

A presently proposed embodiment, exhibiting the significant characteristics related to the present invention, will now be described more specifically for the purpose of exemplification with reference to the accompanying drawings, in which;
**Figure 1** shows a first frame structure of a water-supported wind power plant or an installation in a front view and viewed in a direction from an eye of the wind, associated with the direction of the wind, and
**Figure 1a** illustrates a proposed alternative to the embodiment illustrated in Figure 1 having a different angle of convergence and orientation of the two utilized pontoon units or posts.
**Figure 2** shows a greater part of the structure of Figure 1, in a perspective view, exhibiting the significant characteristics and features related to the present invention and having a first, a vertical, frame structure in a rotatable cooperation with a second, a horizontal, frame structure.
**Figure 3** shows the structure of Figures 1 and 2 in a side view and parallel to a prevailing direction of the wind and its eye of the wind.
**Figure 4** shows the structures of Figures 1 and 2 in a side view, similar to Figure 3, illustrating more in detail the presence of a docking point, and
**Figure 5** schematically and in the form of a block diagram shows the control unit or control equipment, significant to the invention, and having one or more calculating circuits, coordinated with algorithms valid for the invention and associated adaptation circuits.

### DEFINITIONS

**Pontoon units** concerns one or more vertical posts (1', 2') and/or uprights (3') having their lower portions immersed in a body of water.

**Beam structure** concerns a flexurally rigid beam structured such that it can support a chosen number of wind turbines and one or more generator units and which can enclose a system, transferring a rotational motion from the wind turbines to the generator unit.

**A bar-shaped means dimensioned for taking up compressive forces con**cerns a structure, which primarily is dimensioned to be able to take up compressive forces but which also can take up tractive forces.

**A means dimensioned for taking up tractive forces** concerns a structure, which primarily is dimensioned to be able to take up tractive forces but with minor or no requirements of being able able to take up compressive forces.

### DESCRIPTION OF THE PRESENTLY PROPOSED EMBODIMENT

By way of introduction it is pointed out that in the following specification concerning a presently proposed embodiment, which exhibits the significant characteristics related to the invention and which is clarified by the figures shown in the subsequent drawings we have chosen terms and a specific terminology in the purpose of thereby primarily clarifying the concept of the invention.

However, in this connection it should be noted that the terms chosen here shall not to be seen as limiting solely to the terms utilized and chosen here and it should be understood that each in this manner chosen term is to be interpreted such that in addition it comprises all technical equivalents, which function in the same or essentially the same manner so as to thereby achieve the same or essentially the same purpose and/ or technical result.

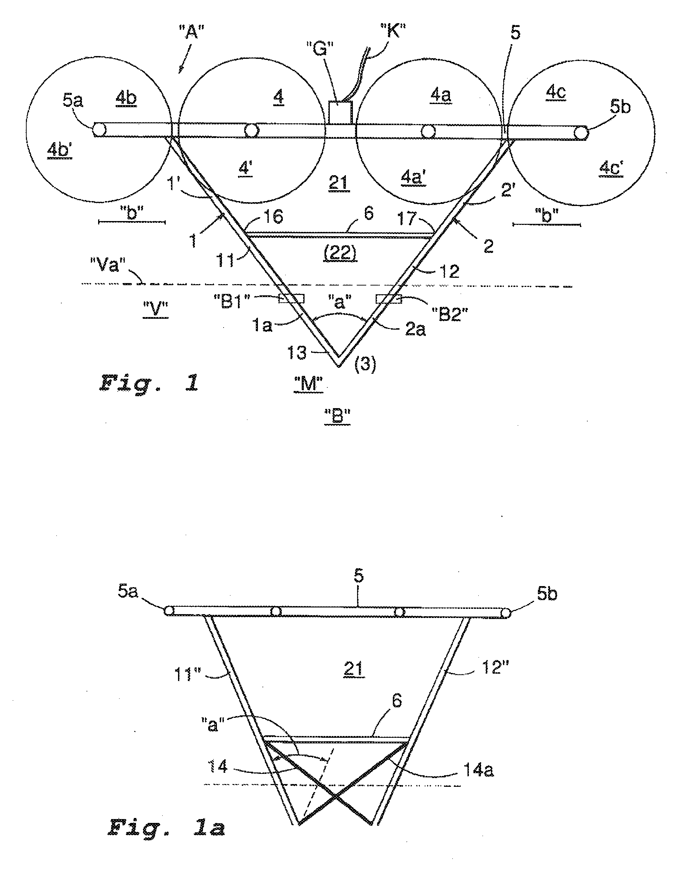

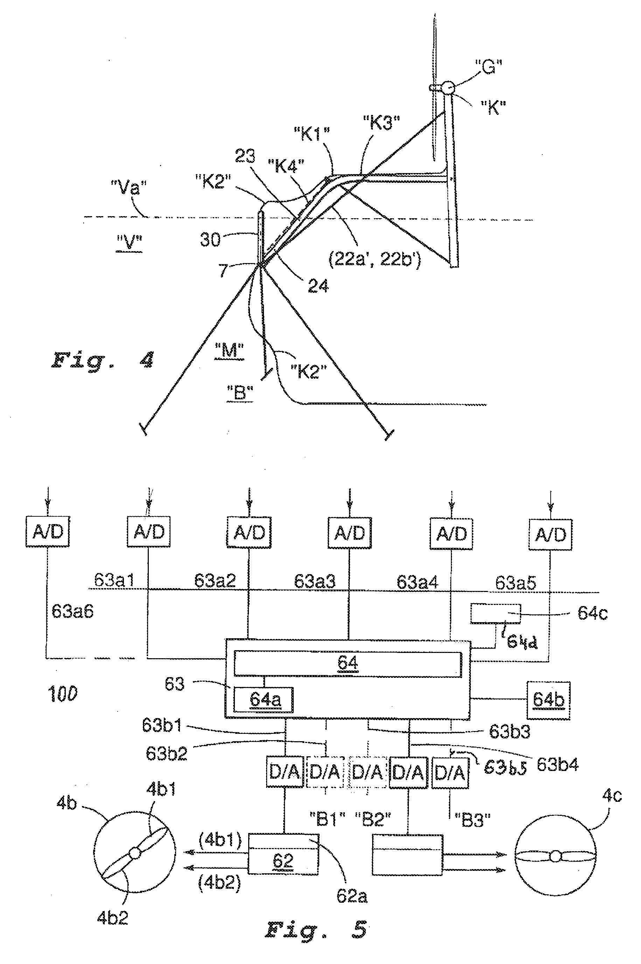

Thus, with reference to the accompanying Figures 1, 1a, 2, 3, and 4, respectively, schematically and specifically not only are shown a proposed application of the present invention but also the significant qualities and inventive features related to the invention have been concretized by the embodiment of Figure 5 now proposed and more specifically described in the following.

Thus, Figures 1 to 4, respectively, show a floatable wind power plant in the form of a wind power installation "A", related to a body of water for creating prerequisites of generating electric power in one generator unit "G" from a prevailing instant force of the wind and direction of the wind from an eye "W" of the wind.

According to Figure 1 the installation "A" comprises; **a;** individual but coordinated pontoon units 1, 2 and (3), respectively, which may float in a body of water **"V", b;** a plurality, up to at least two, adjacently to each other oriented and coordinated wind turbines, designated the reference numerals 4, 4a, 4b, and 4c, respectively, (wind-driven propellers), **c;** a mooring system "M", solidly anchored to a restricted bottom area "B" of said body of water "V", **d;** a single generator unit "G", which may be driven by the rotational motion of the turbines for generating said electric power, and **e;** a cable section "K", connected on the one hand to said generator unit "G" and on the other hand to a land-based distribution network (not specifically shown), adapted for distributing generated electric power.

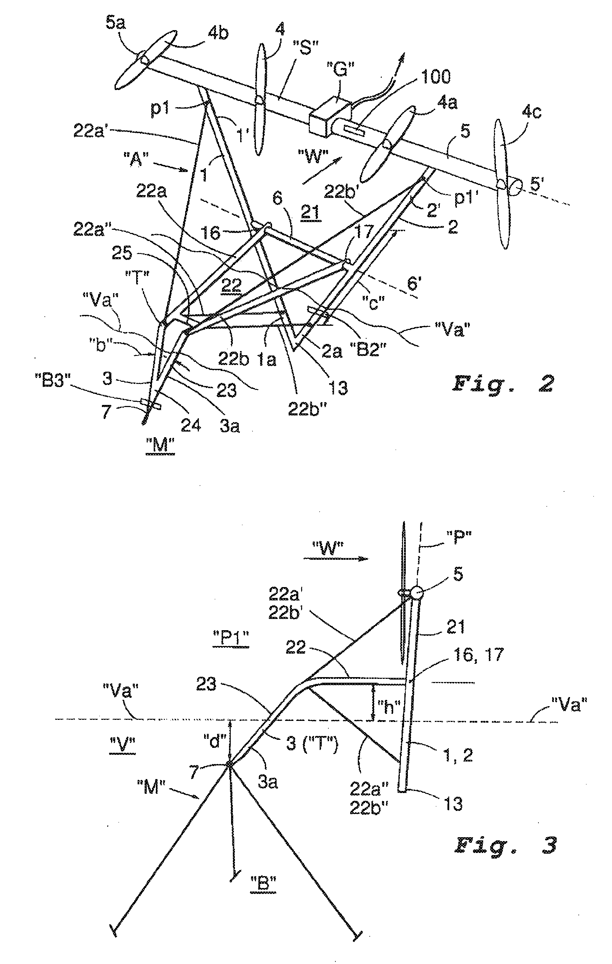

At least two of said pontoon units, designated 1 and 2, in the form of posts 1', 2' are coordinated with a horizontally oriented carrier beam structure 5, an upper beam structure, which is adapted to form and/or support a first vertically, or essentially vertically, oriented frame structure 21, to which frame structure and/or carrier beam 5 said turbines 4 - 4c are side-relatedly distributed, and wherein at least a third one of said pontoon units (3) is coordinated with a second frame structure 22, (Figure 2 and 3) oriented horizontally or essentially horizontally, wherein said first frame structure 21 and said second frame structure 22 are firmly attached to each other, by means of associated frame portions or the like, but are rotatable arranged around a horizontal rotational shaft 6', as shown in Figure 2.

Said two pontoon units 1, 2 are structured by and associated with at least two per se floatable vertical, or at least essentially vertical, posts 1', 2' for forming together with additional structural elements and means, a first frame structure 21, said structure 21 is by the arrangement of an upright (3) or pontoon unit, stabilizing the vertical position of the frame structure 21 in the body of water "V",

Although applying the present invention will subsequently be described with two posts 1', 2' allotted to two pontoon units 1, 2 and one upright (3), allotted to one pontoon unit, it should be noted that this embodiment can be expanded with more than the number of posts and more of the uprights mentioned here and distributed in different manner than the ones shown and utilized here as minimum requirements.

Said two posts 1', 2' associated with pontoon units 1,2 are adapted to be able to support a horizontally oriented carrier upper beam structure 5, which is flexurally rigid in itself and horizontally oriented, said structure 5 being adapted and dimensioned such, that it can support said turbines 4, 4a, 4b, and 4c, respectively, relatedly to each other.

Each one of the two mentioned posts 1', 2' or pontoon units 1, 2 and said upright 3, as in Figures 2 and 3, are dimensioned and/or adapted such, that with their lower partial portions 1a, 2a, 3a (Figure 2) immersed in said body of water "V" they retain the frame structure 21 floating above ther surface "Va" of the water and having said upright 3 displaced sideways by a plane "P" (Figure 3) oriented through said frame structure 21 and said two posts 1', 2' or units 1, 2.

Said pontoon units 1, 2, belonging to the first frame structure 21, are shaped as two downwardly converging frame portions, here designated 11, 12.

Said pontoon unit or upright 3, belonging to a second frame structure 22. is adapted to cooperate with the first frame structure 21 over a frame construction exposing two, from said upright 3 diverging frame portions 22a, 22b, facing away from the first frame structure 21 an its lower beam 6.

Said first frame structure 21 with its horizontally oriented carrier beam structure 5 and a support beam 6 together with its frame portions or posts 1', 2' belonging to its pontoon unit are oriented in one and the same plane "P", such as a vertical plane in Figure 3.

Said diverging frame portions 11, 12 or posts 1', 2' are allotted a mutual angle "a" of less than 90°, but ordinarily greater than 50°, such as around 75°, illustrated in Figure 1.

Said upwardly diverging frame portions 11, 12 are here shown to be oriented for forming a coordinated pointed portion 13.

Said frame portions 11, 12 are here coordinated with a bracing beam 6 oriented over the water surface "Va". The bracing beam 6 is horizontally oriented and disposed below the wind turbines and fastened at half of the length of the frame portions 11, 12.

Said diverging frame portions 11 ", 12" are, in the alternative embodiment of Figure 1a, coordinated over crossed bars or wires 14, 14a dimensioned for tractive forces.

Said first frame structure 21 is with its carrier beam 5 and its bracing beam 6 adapted to solidly support individual pontoon units 1, 2 with or by, respectively, associated fixed fastening points, oriented within an area "b" of 10-30 % of the total length of carrier beam 5, counted from one or both of the end surfaces 5a and 5b, respectively, of carrier beam 5.

More particularly it is indicated that said first frame structure 21 is fastened to said second frame structure 22 over stationary but articulated connections, which here are given the reference numerals 16, 17.

Further it is indicated that said first frame structure 21 is to consist of fastening points for wires, chains or the like, dimensioned for tractive forces and extending from the second frame structure 22.

Said fastening points are oriented above and below the articulated connection 16, 17, which Figure 2 has the purpose of illustrating. The wires have there been allotted reference numerals 22a' and 22a" for the frame portion 22a, and 22b' and 22b" for the frame portion 22b, respectively.

The upper fastening points "p1", "p1'" of wires 22a' and 22b', respectively, are formed either to carrier beam 5 and/or to an upper portion of the downwardly converging frame portions 11, 12 or posts 1', 2'.

The upright or pontoon unit 3 is adapted to cooperate horizontally on the one hand "rotatably rigidly" with said first frame portion 21 and on the other hand to be fastened to and attachingly to cooperate with said mooring system "M" over a so-called docking point 7.

A "rotatably rigid" fastening and cooperation implies that to the upright 3 and to post 1' (alternatively post 2') belongs a bar-shaped means 22a, (22b), which with its end portion is rotatably 16 attached to post 1', with the rotatably rigid fastening being achieved by means 22a', 22a" taking up tractive forces.

More particularly, installation "A" indicates that between said upright 3 and each one of the two posts, a first post 1' and a second post 2', there extends a bar-shaped means dimensioned for taking up pressure, a means 22a for the left post 1' and a similar means 22b for the right post 2'.

The first and second means 22a', 22a" and 22b', 22b", respectively, such as each in the form of a wire with turnbuckles or the like, are attached to the first 1' and the second 2' posts in a known manner, more specifically on opposing sides of the respective rotatable attachments 16 and 17 of the bar-shaped means 22a and 22b.

The bar-shaped means 22a, 22b are attached to their respective associated posts 1' and 2' in a defined middle area "c" oriented between the beam structure 5 and a water surface "Va" belonging to the body of water "V".

A beam structure 6 dimensioned primarily for compressive forces is adapted to cooperate fixedly with the two posts 1', 2' close to but above a water surface "Va" belonging to the body of water.

A single generator unit "G" is here, over a system "S", (not illustrated) transferring rotational motion adapted to be driven by each of a plurality of turbines 4, 4a, 4b and 4c, respectively, all allotted to the beam structure 5.

Said upright or third pontoon unit 3 is adapted to be able to cooperate with and/ or enclose a transformer unit "T" and a cable connection "K1" in Figure 4.

Said transformer unit "T" can then be placed so low, within or adjacent to upright 3, that it will serve as a ballast for said upright 3.

Coordinated means 22a', 22a"; 22b', 22b" in the form of wires taking up tractive forces are in cooperation with and in connection with bars 22a, 22b or the like taking up compressive forces, to form a firm structure in the form of a triangle.

The number of wind turbines 4, 4a, 4b and 4c, respectively, which are to be coordinated with the beam structure 5, is chosen to exceed two and to be below six, such as the number of four, indicated in the illustrated embodiment.

All of the wind turbines 4, 4b; 4a, 4c are adapted for cooperating directly with the system "S", transferring the rotational motion for synchronous operation of the propellers and to rotate the generator.

Over said synchronous operation the propellers of the individual turbines 4 to 4c are adapted to be able to overlap the circular covering surfaces 4', 4a', 4b' and 4c', respectively, of each other.

Said bar-shaped means 11, 12, 5, 6, 22a and 22b, respectively, for taking up compressive forces, are structured as one or more tubular portions, one or more framework structures so as thereby to decrease the dead weight.

More particularly, the latter are to have little or no ability to float and are to have small actuation surfaces for wind and/or waves.

Said wind turbine and/or wind turbines are disposed and adapted to be able to directly cooperate with the system "S", transferring rotational motion without associated gear boxes.

Said vertically oriented and upwardly diverging posts 1', 2' can then be allotted a circular or an elliptical or at least essentially circular or elliptical cross-section with its main axis or major axis oriented parallel to the lengthwise orientation 5' of the beam structure 5.

Each one of said posts 1', 2' and the third upright 3 can at that time be provided with holes so as to form a float having a cylindrical or elliptical or other cross-sectional shape.

A reduction of the effect of a wave motion and its influence is carried out by reducing the surface which is intended to face the eye of the wind "W", wherein this surface can be a framework of known technology.

All of the turbines 4 to 4c are coordinated in one and the same, or in any case essentially in one and the same, vertical plane, such as the indicated plane "P", through the frame portion 21 and the side-related beam structure 5, in a direction towards the third upright 3.

Said upright 3 is adapted to take a vertical position by means of actuation of ballast and exhibits, over wire means 22a', 22a"; 22b', 22b" or the like, a flexurally rigid fastening to said posts 1', 2'.

A chosen anchoring or mooring system "M" is adapted to exhibit a well-defined, floating docking or fixation point 7 if desired.

Said fixation point 7 can in such case be adapted to such depth "d" below the surface "Va" of the water that in an increasing and higher force of the wind this fixation point 7 will lower said upright 3 so as to thereby reduce the angular position of the pontoon unit and the frame portion 21, as related to a vertical plane "P".

Said beam structure 5 has the form of the profile of a hole and surrounds the mentioned system "S" transferring motion for driving one and the same generator unit "G", wherein said generator unit should be centrally oriented with regard to the beam structure 5.

The relevant platform or structure "A" according to Figures 1 and 2 has a width, which is more than 200 meters, and hence occuring variations in the wind velocities will have to be considered. This also leads to making it necessary to turn the platform by other means, apparatuses and/or arrangements, so that it can occupy por adapt a most appropriate angle with regard to a main direction.

With reference primarily to Figure 3 it is shown that said second frame structure 22, with its horizontally oriented frame portions 22a, 22b belonging to the pontoon unit, is oriented in one and the same, such as horizontal, plane "P1" with and/or exhibiting an external downwardly deflected frame portion 23.

Said diverging frame portions 22a, 22b are allotted a mutual angle "b" of less than 65° and usually more than 40°.

Said diverging frame portions 22a, 22b, with their deflected frame portion 23, are oriented such as to form a coordinated pointed portion 24, whereas said diverging (or converging) frame portions 22a, 22b are adjacent to their deflected frame portions 23 coordinated with a bracing beam 25, oriented over the surface of the water.

Said first frame structure 21 comprises the attachment points for wires, chains or similar means 22a', 22a"; 22b', 22b" dimensioned for tractive forces and being attached to or adjacent to the external end portion 24 of the second frame structure 22.

Here the attachment points are oriented the same distance or essentially the same distance above and below the articulated connection 16, 17 of the bracing beam 6.

The possibility is indicated here that the converging frame portions or pontoon units associated with the first frame structure can be placed such with regard to the wind turbines that bracing can occur without interfering with said wind turbines.

Said bracing beam 6 and said frame portion or frame portions allotted to the other frame structure 22 can be oriented at a vertical height ("h") that is such over a water level "Va" that a wave, with an expected highest wave height, can pass underneath.

With reference to Figure 4 it is illustrated that the mooring system "M" exhibits a docking or fixation point 7 coordinated with the second frame structure 22 below the surface "Va" of the water and with a buoy arrangement 30 attached thereto.

The buoy arrangement 30 is adapted to support a sub-marine cable section "K2" for the land-based distribution network distributing generated electric power, said cable section "K2" being electrically connected over a cable connection "K1" with a cable section "K3" allotted to the second frame structure 22 and/or the first frame structure 21.

The cable section "K3" is adapted to extend a distance along the second frame structure 22 from the docking point 7.

According to the embodiment of Figure 4 an anchorage and a cable in this execution can be installed independently of the floating unit. This system simplifies a procedure of towing the unit "A" to harbour for example for maintenance by solely disconnecting via docking point 7.

Also the cable has a simple plug arrangement.

Furthermore, the float or buoy arrangement 30 can, in the unit, being connected, cooperate with the external portion 24 so that waves do not strain the cable. This cabling "K4" is illustrated by dashed line.

The present invention has as its primary characteristic to indicate, in a structure more closely described above or some other floating structure, utilization of a control unit or a control equipment 100 for, in response to a prevailing wind direction with the help of one or more means, apparatuses and/or arrangements, controlling the wind turbines towards the direction of the wind and the eye of the wind "W" by rotating the floatable arrangement "A" as a unit over means, apparatuses and/or other arrangements that may be activated.

Reference is now made to introducing to said control unit or control equipment 100 as input data the relevant direction of the wind, the relevant direction of the propeller of the wind turbine and similar.

The equipment 100 is then to generate outgoing data over associated calculating circuits and algorithms for effecting one or more means, apparatuses and/or arrangements for creating a common rotation of the floating installation "A".

One or more of said means or apparatuses are then to consist of one or more sub-marine propeller unit, such as the ones disclosed by reference numerals "B1" and "B2", respectively.

One or more of said means or apparatuses can then consist of equipment designated "B3" displacing a chosen docking or attachment point 7.

Such point 7 of displacement can then be allotted to an upper portion of the mooring system "M".

A computer unit 64 belonging to the control unit or control equipment 100 and calculating circuits are to be able to influence an arrangement 62 for controlling the rotational motion of the propeller blade during its rotation and a first means 62a can be adapted under at least one evolution, over an arrangement, to provide propeller blades 4b1, 4b2 with different positions of rotation. These propeller blades are to be turned along an axis considered as a central axis for the blade and is extending perpendicularly from the hub.

Said arrangement 62 can then be adapted to turn one or both propeller blades 4b1, 4b2 to a first rotational position during part of its downwardly going motion and adapted to turn the propeller blades to a second rotational position during part of its upwardly going motion. During this downwardly motion and/or during this upwardly motion the blade position may change.

Said means, apparatuses and/or arrangements and said units "B1", "B2" and/or "B3" are controllable by control unit or control equipment 100 for generating, in response to chosen input signals i.a. in the form of relevant force of the wind, direction of the wind, wave structure, position of the installation etc and/or the angular position of the propeller blade with regard to its hub, the climbing profile of the propeller blades and/or relevant disturbances, one or more output signals for affecting said apparatuses and/or changing the rotational position of the propeller blades towards a maximized generated electric power.

The arrangement 62 can be influenced by control unit 100 of the distribution of the speed of the wind within the rotational field of the propeller blade.

For this purpose reference is made to the block diagram of control unit or control equipment 100 in accordance with Figure 5.

In accordance with the specific characteristics of the invention, utilizing control equipment 100 is indicated for controlling in response to a prevailing wind direction "W" with the assitance of one or more means and apparatuses the position of the installation "A" in the collection of water "V" and/or the wind turbines against the direction of the wind and the eye of the wind by turning the floatable structure "A" as a unit.

The control equipment 100 of Figure 5 illustrates the existence of a number of incoming or input data, via A/D-converters, wherein incoming data 63a1 can represent relevant direction of the wind, incoming data 63a2 can represent the relevant force of the wind, incoming data 63a3 can represent relative wave height and/or incoming direction, incoming data 63a4 can represent the geographical direction of the structure and 63a5 can represent other relevant information from associated sensors.

These incoming or input data are received in a central unit 63 with a computer unit 64 and calculating circuits 64a, as well as a program memory 64b and a memory 64c for allotted algorithms 64d.

Central unit 63 generates a plurality of output signals, wherein output signal 63b1 is, over a D/A-converter, to control the wind turbine 4b over an interface or an adapting circuit 62 and the output signal 63b4 is to control the wind turbine 4c over a D/A-converter.

Output signals 63b2 and 63b3 are to control the means, apparatuses and/or arrangements "B1" and B2", whereas the output signal 63b5 is to control the means, apparatuses and/or arrangement "B3".

As proposed embodiments falling within the scope of the present invention it is further indicated that to said control equipment 100 introduce as input data 63a6, relevant setting of the rotation of the propeller 4b1, 4b2 of wind turbine 4b relative to its hub, and similar.

The embodiment makes use of one or more generator units "G".

The invention is of course not limited to the embodiment disclosed above as an example and can be subjected to modifications within the scope of the inventive concept illustrated in the following claims.

It should be particularly noted that each shown unit and/or circuit can be combined with each other shown unit and/or circuit within the frame of being able to achieve the desired technical function.

## Claims

1. A floatable wind power plant ("A") in the form of an installation related to a body of water ("V") for creating prerequisites from a prevailing force of the wind for generating electric power, comprising:
a) individual but connected pontoon units (1, 2, 3), which may float in a body of water ("V"),
b) at least two wind turbines (4, 4a, 4b, 4c) arranged adjacent to each other,
c) a mooring system ("M"), solidly anchored to a restricted bottom area ("B") of said body of water ("V"),
d) a generator unit ("G"), which may be driven by the rotational motion of the turbines (4, 4a, 4b, 4c) for generating said electric power,
e) a cable section ("K"), connected on the one hand to said generator unit ("G") and on the other hand to a land-based distribution network, for distributing generated electric power,
wherein at least two of said pontoon units (1, 2) are in the form of posts (1', 2') and connected to a horizontally oriented carrier beam structure (5) to form an essentially vertically oriented first frame structure (21),
wherein said turbines (4 - 4c) are arranged side by side on said carrier beam structure (5),
wherein a third one of said pontoon units comprises an upright (3) and an essentially horizontally oriented second frame structure (22), wherein said first frame structure (21) and said second frame structure (22) are united to each other, and
wherein said upright (3) is arranged at a distance from a plane ("P") containing the first frame structure (21) and said third pontoon unit is attachable to said mooring system ("M") over a docking point (7),
wherein the wind power plant comprises a control equipment (100) adapted to control the position of the wind power plant ("A") in response to a prevailing direction of the wind ("W") such that the wind turbines (4 - 4c) are directed towards the direction of the wind and the eye of wind by turning the floatable wind power plant as a whole, and
wherein as input data to said control equipment (100) are introduced relevant direction (63a1) of the wind, relevant force of the wind (63a2) and relevant position (63a4) of said wind power plant, and wherein outgoing data from said control equipment (100) are generated over said control equipment (100) via allotted calculating circuits and stored algorithms (64d), wherein:
the wind power plant further comprises a means ("B3") for horizontally displacing said docking point (7) to the mooring system ("M") in order to create a turning of the floating wind power plant as a whole.

2. Wind power plant in accordance with claim 1, wherein said docking point (7) is allotted to an upper portion of the mooring system ("M").

3. Wind power plant in accordance with any one of the preceding claims, further comprising:
a calculation circuit (64a), belonging to the control equipment (100), and adapted to influence an arrangement (62) for controlling the rotational motion of the propeller blades (4b1, 4b2) during rotation,
and a first means (62a) adapted to allot the propeller blades (4b1, 4b2) different pitch settings during one revolution.

4. Wind power plant in accordance with claim 3, wherein said arrangement (62) is adapted to turn the propeller blades (4b1, 4b2) to a first pitch setting during a part of or their entire downwardly directed motion and is adapted to turn the propeller blades (4b1, 4b2) to a second pitch setting during a portion of or their entire upwardly motion.

5. Wind power plant in accordance with any one of claims 3 or 4, wherein said arrangement (62) is controllable by the control equipment (100) for generating an output signal (63b1; 63b4) for changing the pitch settings of the propeller blades (4b1, 4b2) and/or the position of the wind power plant towards maximized generated electric power in response to input signals in the form of relevant force of the wind (63a2), angular position (63a6) of the propeller blade (4b1, 4b2) relative to its hub, the pitch profile of the propeller blade (4b1, 4b2) and/or relevant disturbances.

6. Wind power plant in accordance with any one of claims 3-5, wherein the arrangement (62) is adapted to be actuated by the control equipment (100) by the distribution of the speed of the wind in the field of rotation of the propeller blade (4b1, 4b2).

## Patentansprüche

1. Schwimmfähige Windkraftanlage ("A") in Form einer Installation, die mit einem Wasserkörper ("V") in Beziehung steht, um aus einer vorherrschenden Kraft des Windes Bedingungen für die Erzeugung elektrischer Leistung zu erzeugen, die Folgendes umfasst:
a) einzelne, jedoch verbundene Schwimmkörpereinheiten (1, 2, 3), die in einem Wasserkörper ("V") schwimmen können,
b) wenigstens zwei Windturbinen (4, 4a, 4b, 4c), die nebeneinander angeordnet sind,
c) ein Festmachersystem ("M"), das an einem begrenzten Bodenbereich ("B") des Wasserkörpers ("V") fest verankert ist,
d) eine Generatoreinheit ("G"), die durch die Drehbewegung der Turbinen (4, 4a, 4b, 4c) angetrieben werden kann, um die elektrische Leistung zu erzeugen,
e) einen Kabelabschnitt ("K"), der einerseits mit der Generatoreinheit ("G") und andererseits mit einem landbasierten Verteilungsnetz, um die erzeugte elektrische Leistung zu verteilen, verbunden ist,
wobei wenigstens zwei der Schwimmkörpereinheiten (1, 2) die Form von Stützen (1', 2') haben und mit einer horizontal orientierten Tragbalkenstruktur (5) verbunden sind, um eine im Wesentlichen vertikal orientierte erste Rahmenstruktur (21) zu bilden,
wobei die Turbinen (4-4c) nebeneinander an der Tragbalkenstruktur (5) angeordnet sind,
wobei eine Dritte der Schwimmkörpereinheiten einen Pfosten (3) und eine im Wesentlichen horizontal orientierte zweite Rahmenstruktur (22) umfasst, wobei die erste Rahmenstruktur (21) und die zweite Rahmenstruktur (22) miteinander vereinigt sind, und
wobei der Pfosten (3) in einem Abstand von einer Ebene ("P"), die die erste Rahmenstruktur (21) enthält, angeordnet ist und die dritte Schwimmkörpereinheit an dem Festmachersystem ("M") über einem Andockpunkt (7) befestigt werden kann,
wobei die Windkraftanlage eine Steueranlage (100) umfasst, die dafür ausgelegt ist, die Position der Windkraftanlage ("A") in Reaktion auf eine vorherrschenden Richtung des Windes ("W") zu steuern, derart, dass die Windturbinen (4-4c) in Richtung des Windes und zu dem Auge des Windes gerichtet sind, indem die schwimmfähige Windkraftanlage als Ganzes gedreht wird, und
wobei als Eingangsdaten in die Steueranlage (100) die relevante Richtung (63a1) des Windes, die relevante Kraft des Windes (63a2) und die relevante Position (63a4) der Windkraftanlage eingegeben werden und wobei Ausgangsdaten von der Steueranlage (100) mittels der Steueranlage (100) über zugewiesene Rechenschaltungen und gespeicherte Algorithmen (64d) erzeugt werden, wobei:
die Windkraftanlage ferner ein Mittel ("B3") umfasst, um den Andockpunkt (7) an das Festmachersystem ("M") horizontal zu verlagern, um eine Drehung der schwimmenden Windkraftanlage als Ganzes hervorzurufen.

2. Windkraftanlage nach Anspruch 1, wobei der Andockpunkt (7) einem oberen Abschnitt des Festmachersystems ("M") zugewiesen ist.

3. Windkraftanlage nach einem der vorhergehenden Ansprüche, die ferner Folgendes umfasst:
eine Rechenschaltung (64a), die zu der Steueranlage (100) gehört und dafür ausgelegt ist, eine Anordnung (62) zum Steuern der Drehbewegung der Propellerschaufeln (4b1, 4b2) während der Drehung zu beeinflussen,
und ein erstes Mittel (62a), das dafür ausgelegt ist, den Propellerschaufeln (4b1, 4b2) unterschiedliche Anstellwinkeleinstellungen während einer Umdrehung zuzuweisen.

4. Windkraftanlage nach Anspruch 3, wobei die Anordnung (62) dafür ausgelegt ist, die Propellerschaufeln (4b1, 4b2) während eines Teils ihrer nach unten gerichteten Bewegung oder ihrer gesamten nach unten gerichteten Bewegung in eine erste Anstellwinkeleinstellung zu drehen, und dafür ausgelegt ist, die Propellerschaufeln (4b1, 4b2) während eines Teils ihrer nach oben gerichteten Bewegung oder während ihrer gesamten nach oben gerichteten Bewegung in eine zweite Anstellwinkeleinstellung zu drehen.

5. Windkraftanlage nach einem der Ansprüche 3 oder 4, wobei die Anordnung (62) durch die Steueranlage (100) steuerbar ist, um ein Ausgangssignal (63b1; 63b4) zu erzeugen, um die Anstellwinkeleinstellungen der Propellerschaufeln (4b1, 4b2) und/oder die Position der Windkraftanlage in Reaktion auf Eingangssignale in der Form der relevanten Kraft des Windes (63a2), der Winkelposition (63a6) der Propellerschaufel (4b1, 4b2) relativ zu ihrem Hub, des Anstellprofils der Propellerschaufeln (4b1, 4b2) und/oder relevanter Störungen zu einer maximierten erzeugten elektrischen Leistung zu ändern.

6. Windkraftanlage nach einem der Ansprüche 3-5, wobei die Anordnung (62) dafür ausgelegt ist, mittels der Steueranlage (100) durch die Verteilung der Geschwindigkeit des Windes in dem Drehfeld der Propellerschaufel (4b1, 4b2) betätigt zu werden.

## Revendications

1. Centrale éolienne flottable ("A") sous la forme d'une installation associée à un volume ("V") d'eau, destinée à créer des conditions préalables à la génération d'énergie électrique à partir d'une force dominante du vent, comportant :
a) des unités (1, 2, 3) de ponton individuelles mais reliées, susceptibles de flotter dans un volume ("V") d'eau,
b) au moins deux éoliennes (4, 4a, 4b, 4c) disposées de façon à être adjacentes l'une à l'autre,
c) un système ("M") d'amarrage, fermement ancré à une zone restreinte ("B") de fond dudit volume ("V") d'eau,
d) une unité génératrice ("G"), susceptible d'être entraînée par le mouvement de rotation des éoliennes (4, 4a, 4b, 4c) pour générer ladite énergie électrique,
e) un tronçon ("K") de câble, relié d'une part à ladite unité génératrice ("G") et d'autre part à un réseau de distribution basé à terre, en vue de distribuer l'énergie électrique générée,
au moins deux desdites unités (1, 2) de ponton se présentant sous la forme de poteaux (1', 2') et étant reliées à une structure (5) de poutre porteuse orientée horizontalement pour former une première structure (21) de charpente orientée essentiellement verticalement,
lesdites turbines (4-4c) étant disposées côte à côte sur ladite structure (5) de poutre porteuse,
une troisième desdites unités de ponton comportant un montant (3) et une deuxième structure (22) de charpente orientée essentiellement horizontalement, ladite première structure (21) de charpente et ladite deuxième structure (22) de charpente étant unies l'une à l'autre, et
ledit montant (3) étant disposé à une certaine distance d'un plan ("P") contenant la première structure (21) de charpente et ladite troisième unité de ponton pouvant être rattachée audit système ("M") d'amarrage par-dessus un point (7) d'arrimage,
la centrale éolienne comportant un équipement (100) de commande prévu pour commander la position de la centrale éolienne ("A") en réaction à une direction dominante du vent ("W") de telle façon que les éoliennes (4-4c) soient dirigées vers la direction du vent et le lit du vent en faisant pivoter la centrale éolienne flottable dans son ensemble, et
une direction pertinente (63a1) du vent, une force pertinente du vent (63a2) et une position pertinente (63a4) de ladite centrale éolienne étant introduites en tant que données d'entrée dans ledit équipement (100) de commande, et des données émises à partir dudit équipement (100) de commande étant générées sur ledit équipement (100) de commande via des circuits de calcul affectés et des algorithmes stockés (64d) :
la centrale éolienne comportant en outre un moyen ("B3") servant à déplacer horizontalement ledit point (7) d'arrimage jusqu'au système ("M") d'amarrage afin de créer un pivotement de la centrale éolienne flottante dans son ensemble.

2. Centrale éolienne selon la revendication 1, ledit point (7) d'arrimage étant affecté à une partie supérieure du système ("M") d'amarrage.

3. Centrale éolienne selon l'une quelconque des revendications précédentes, comportant en outre :
un circuit (64a) de calcul, appartenant à l'équipement (100) de commande et prévu pour influencer un dispositif (62) servant à commander le mouvement de rotation des pales (4b1, 4b2) d'hélice pendant la rotation,
et un premier moyen (62a) prévu pour affecter aux pales (4b1, 4b2) d'hélice différents réglages de pas pendant un tour.

4. Centrale éolienne selon la revendication 3, ledit dispositif (62) étant prévu pour orienter les pales (4b1, 4b2) d'hélice suivant un premier réglage de pas pendant une partie ou la totalité de leur mouvement dirigé vers le bas et étant prévu pour orienter les pales (4b1, 4b2) d'hélice suivant un deuxième réglage de pas pendant une partie ou la totalité de leur mouvement vers le haut.

5. Centrale éolienne selon l'une quelconque des revendications 3 ou 4, ledit dispositif (62) étant commandable par l'équipement (100) de commande pour générer un signal (63b1 ; 63b4) de sortie servant à modifier les réglages de pas des pales (4b1, 4b2) d'hélice et / ou la position de la centrale éolienne vers une énergie électrique généré maximisée en réaction à des signaux d'entrée sous la forme d'une force pertinente du vent (63a2), d'une position angulaire (63a6) de la pale (4b1, 4b2) d'hélice par rapport à son moyeu, du profil de pas de la pale (4b1, 4b2) d'hélice et / ou de perturbations pertinentes.

6. Centrale éolienne selon l'une quelconque des revendications 3 à 5, le dispositif (62) étant prévu pour être actionné par l'équipement (100) de commande sous l'effet de la répartition de la vitesse du vent dans le champ de rotation de la pale (4b1, 4b2) d'hélice.
